# EUROPÄISCHE PATENTSCHRIFT

(11) **EP 3 565 270 B1**
(45) Veröffentlichungstag und Bekanntmachung des Hinweises auf die Patenterteilung: **15.12.2021**
(21) Anmeldenummer: 19169500.6
(22) Anmeldetag: 16.04.2019
(51) Int. Cl.: H04R 1/10, G10L 25/12, G10L 21/0208

(54) **VERFAHREN ZUR RAUSCHUNTERDRÜCKUNG IN EINEM AUDIOSIGNAL**
METHOD FOR NOISE SUPPRESSION IN AN AUDIO SIGNAL
PROCÉDÉ DE RÉDUCTION DU BRUIT DANS UN SIGNAL AUDIO

(30) Priorität: 30.04.2018 DE 102018206689
(43) Veröffentlichungstag der Anmeldung: 06.11.2019
(73) Patentinhaber: Sivantos Pte. Ltd., Singapore 539775 (SG)
(72) Erfinder: ROSENKRANZ, Tobias Daniel, 91088 Bubenreuth (DE)
(74) Vertreter: FDST Patentanwälte

(56) Entgegenhaltungen:
- US-A- 5 742 694
- US-A1- 2001 005 822
- US-A1- 2015 092 966
- US-A1- 2017 004 841

## Beschreibung

Die Erfindung betrifft ein Verfahren zur Rauschunterdrückung in einem Audiosignal.

In vielen Audio-Anwendungen insbesondere bei der Verarbeitung von Mikrofonsignalen, tritt Rauschen auf, welches im Rahmen der Anwendung unterdrückt werden soll. Meist ist hierbei ein eigentlich erwünschtes Nutzsignal von oftmals schwer zu bestimmendem Rauschen überlagert. Das Rauschen kann dabei die Wahrnehmbarkeit des Signals in teils erheblichem Maße beeinträchtigen.

Bei Hörgeräten besteht das Nutzsignal oftmals im Sprachsignal eines Gesprächspartners des Benutzers des Hörgerätes. Durch Hintergrundrauschen der Umgebung, welches ebenfalls von den Mikrofonen des Hörgerätes aufgenommen und entsprechend mit weiterverarbeitet wird, kann der Benutzer gestört oder abgelenkt werden, sodass zum Erkennen der Sprachbeiträge eine wesentlich höhere Anstrengung und insbesondere Konzentration erforderlich sein kann. Zur Rauschunterdrückung wird in vielen Hörgeräten ein internes Signal des Hörgerätes in verschiedene Frequenzbänder aufgeteilt, und für eine Rauschunterdrückung wird das Signal durch einen Verstärkungsfaktor für diejenigen Frequenzbänder abgesenkt, in welchen ein besonders hoher Rauschanteile ermittelt wird.

Das geschilderte Vorgehen behandelt jedoch aufgrund der einheitlichen Verstärkungsfaktoren für die jeweiligen Frequenzbänder sämtliche Signalkomponenten in einem betreffenden Frequenzband gleich. Ist nun in einem Frequenzband ein hoher Nutzsignalanteil, welcher eigentlich erwünscht ist, von einem erheblichen Rauschen überlagert, so wird durch die beschriebene Methode infolge der Absenkung des Verstärkungsfaktors gemäß des hohen Rauschanteils auch der Nutzsignalanteils mit abgeschwächt. Das Signal-zu-Rausch-Verhältnis (SNR) kann deswegen durch diese Art der Rauschunterdrückung sogar verschlechtert werden.

In vielen Fällen ist das gewünschte Nutzsignal durch ein Sprachsignal gegeben. Dieses zeichnet sich durch eine besondere harmonische Struktur der einzelnen Signalkomponenten aus. Infolge dieser harmonischen Struktur wäre für eine Unterdrückung von Rauschen zwischen zwei harmonischen Komponenten des Sprachsignals eine Filterung des gesamten Audiosignals mit einer Frequenzauflösung erforderlich, welche die verschiedenen harmonischen Komponenten in unterschiedliche, bevorzugt nicht benachbarte Frequenzbändern abbildet. Eine angesichts der üblichen Frequenzen und Frequenzabstände für die harmonischen Komponenten derartig hohe Frequenzauflösung ist jedoch infolge der hieraus entstehenden hohen Latenzen und der entsprechenden Zeitverzögerung in der Signalverarbeitung bei Hörgeräten unerwünscht.

Die US 5 742694 A zeigt ein Filter zur Rauschunterdrückung eines Eingangssignals, wobei mittels eines adaptiven Prädiktionsfilters ein prädizierbarer Anteil des Eingangssignals prädiziert wird, und anhand des prädizierbaren Anteils des Eingangssignals und des Eingangssignals selbst ein Prädiktionsfehler abgeschätzt wird. Der prädizierbare Anteil des Eingangssignals sowie der Prädiktionsfehler werden zur Erzeugung eines rauschunterdrückten Ausgangssignals verwendet. Das Filter wendet hierbei einen gleitenden Mittelwert auf das zeitverzögerte Eingangssignal an. Die US 2015/0 092 966 A1 nennt ein ebenso ein adaptives Prädiktionsfilter zur linearen Prädiktion eines periodischen Signalanteils eines Eingangssignals.

In der US 2001/0005 822 A1 wird ein lineares Prädiktionsfilter dazu verwendet, einen Sprachanteil gegenüber einem Rauschanteil eines verrauschten Sprachsignals hervorzuheben, wobei ein Fehlersignal der Prädiktion als Differenz des verrauschten Sprachsignals und dem prädizierten Signalanteil gebildet wird.

Der Erfindung liegt daher die Aufgabe zugrunde, ein Verfahren zur Rauschunterdrückung in einem Audiosignal anzugeben, welches insbesondere für ein von Rauschen überlagertes, tonales Nutzsignal ein möglichst gutes SNR liefern soll. Die genannte Aufgabe wird erfindungsgemäß gelöst durch ein Verfahren zur Rauschunterdrückung in einem Audiosignal, wobei das Audiosignal in eine Mehrzahl an Frequenzbändern zerlegt wird, wobei für eine Mehrzahl an Prädiktionszeitpunkten jeweils anhand von Signalanteilen des Audiosignals vor dem Prädiktionszeitpunkt ein dem Prädiktionszeitpunkt nachfolgender Signalanteil prädiziert wird, wobei die Prädiktion eines dem jeweiligen Prädiktionszeitpunkt nachfolgenden Signalanteils anhand der Signalanteile des Audiosignals vor dem Prädiktionszeitpunkt jeweils frequenzbandweise erfolgt, wobei aus den jeweils einem Prädiktionszeitpunkt nachfolgenden Signalanteilen ein prädiziertes Audiosignal gebildet wird, und wobei anhand des prädizierten Audiosignals ein rauschunterdrücktes Audiosignal erzeugt wird, wobei zur Erzeugung des rauschunterdrückten Audiosignals das prädizierte Audiosignal mit Signalanteilen des Audiosignals frequenzbandweise gemischt wird, und wobei das Mischungsverhältnis in Abhängigkeit von Beiträgen von harmonischen Komponenten und/oder von Beiträgen von unkorrelierten Komponenten im jeweiligen Frequenzband bestimmt wird.

Vorteilhafte und teils für sich gesehen erfinderische Ausgestaltungen sind Gegenstand der Unteransprüche und der nachfolgenden Beschreibung. Insbesondere erfolgt die Erzeugung des rauschunterdrückten Audiosignals anhand des prädizierten Audiosignals durch eine Mischung oder Überlagerung des prädizierten Audiosignals mit dem Audiosignal oder mit vorverarbeiteten Signalanteilen des Audiosignals, wobei als Vorverarbeitung insbesondere eine frequenzbandabhängige Verstärkung umfasst ist.

Unter einem Prädiktionszeitpunkt ist hierbei insbesondere ein Zeitpunkt im Rahmen der Zeitreferenz des Audiosignals zu verstehen. Dies bedeutet, dass Signalanteile vor dem Prädiktionszeitpunkt eine frühere Zeitreferenz aufweisen, und dem Prädiktionszeitpunkt nachfolgende Signalanteile eine spätere Zeitreferenz. Die Mehrzahl an Prädiktionszeitpunkten, für welche jeweils nachfolgende Signalanteile prädiziert werden, bilden somit eine zeitliche Abfolge im Rahmen der Zeitreferenz des Audiosignals.

Bevorzugt werden die Prädiktionszeitpunkte und die nach einem jeweiligen Prädiktionszeitpunkt zu prädizierenden Signalanteile derart gewählt, dass diese Signalanteile die volle Zeitspanne zum nächsten Prädiktionszeitpunkt abdecken, d.h., dass jedem einzelnen Zeitpunkt bis zum nächsten Prädiktionszeitpunkt ein prädizierter Signalanteil zugeordnet werden kann, welcher anhand der Signalanteile vor dem aktuell letzten Prädiktionszeitpunkt prädiziert wird. Diese Zuordnung kann insbesondere auch diskretisiert laufen, sodass zu jedem Zeitpunkt nach dem Prädiktionszeitpunkt ein Audio-Sample, auch als Audio-Abtastwert bezeichnet, mit existiert, welches die betreffende Zeitreferenz repräsentiert.

Insbesondere kann das prädizierte Audiosignal auch derart gebildet werden, dass für eine bestimmte Zeitreferenz prädizierte Signalanteile zu mehreren Prädiktionszeitpunkten herangezogen werden. Erfolgt die Prädiktion z.B. über einzelne Audio-Samples als Signalanteile, so kann ein entsprechendes Audio-Sample des prädizierten Audiosignals zu einer konkreten Zeitreferenz gebildet werden durch eine gewichtete Mittelung mehrerer jeweils zu unterschiedlichen Prädiktionszeitpunkten prädizierter Audio-Samples derselben Zeitreferenz. Das prädizierte Audiosignal wird somit bei einer konkreten Zeitreferenz gebildet als gewichteter Mittelwert mehrerer sich überlappender Signalanteile, welche jeweils zu einem unterschiedlichen Prädiktionszeitpunkt prädiziert wurden, aber allesamt dieselbe Zeitreferenz aufweisen.

Allgemein werden also einzelne Signalanteile vor einem Prädiktionszeitpunkt verwendet, um anhand dieser einen Signalanteil am und/oder nach dem Prädiktionszeitpunkt zu prädizieren. Durch eine zeitliche Staffelung der Prädiktionszeitpunke erhält man somit prädizierte Signalanteile. deren Zeitreferenzen bevorzugt aneinander anschließen oder sich überlappen, sodass aus diesen Signalanteilen entsprechend ihrer jeweiligen Zeitreferenz ein eigenständiges prädiziertes Audiosignal gebildet werden kann.

Hierbei wird einerseits der Umstand ausgenutzt, dass die Prädiktion von zukünftigen Signalanteilen aus bereits vorliegenden Signalanteilen des Audiosignals anhand von Korrelationen im Audiosignal erfolgt, und andererseits übliche Nutzsignalanteile in einem Audiosignal meist eine hohe Korrelation aufweisen. Die korrelierten Signalkomponenten des Audiosignals sind somit prinzipiell prädizierbar, während unkorrelierte Komponenten wie statistisch verteiltes Rauschen prinzipiell nicht prädiziert werden können. Das prädizierte Audiosignal weist somit einen deutlich höheren Anteil an korrelierten Signalkomponenten auf als das ursprüngliche Audiosignal, wodurch ein unkorrelierter Rauschanteil im Audiosignal unterdrückt werden kann.

Hierbei ist zu berücksichtigen, dass in vielen Anwendungen die Nutzsignale eines zu verarbeitenden Audiosignals oftmals sehr stark korreliert sind. So weisen z.B. die tonalen Komponenten von Musik eine sehr hohe Korrelation auf, da diese im Wesentlichen aus einer Grundfrequenz und dem für den Klang eines Tons charakteristischen harmonischen Obertonspektrum bestehen, welches durch ganzzahlige Vielfache der Grundfrequenz gebildet wird. Auch die stimmhaften und somit tonalen Komponenten von Sprache weisen diese harmonische Struktur im Frequenzbereich auf. Die besagten festen Frequenzkomponenten, also die Grundfrequenz und ihre Harmonischen, führen hierbei jeweils zu einer entsprechenden Periodizität des Nutzsignalanteils, welche sich in entsprechenden Korrelationen der Signalanteile äußern, wodurch diese Nutzsignalkomponenten besonders gut durch die Prädiktion erfasst und somit auch prädiziert werden können. Unkorreliertes Rauschen, welches diese festen Frequenzkomponenten überlagert, wird somit bei der Prädiktion unterdrückt.

Bevorzugt wird für Signalanteile des Audiosignals vor einem Prädiktionszeitpunkt jeweils eine Mehrzahl an dem Prädiktionszeitpunkt vorausgehenden Audio-Samples herangezogen. Insbesondere kann hierbei das Audiosignal zunächst in einzelne Frequenzbänder zerlegt werden, und als die einzelnen Signalanteile für jedes derjenige Frequenzbänder, in welchen eine Prädiktion von Signalanteilen erfolgen soll, eine Mehrzahl von Audio-Samples derart herangezogen werden, dass durch die Mehrzahl von Audio-Samples im betreffenden Frequenzband der Signalanteil des Audiosignals im Frequenzband wiedergegeben wird. Besonders bevorzugt werden dabei als Signalanteile eine lückenlose Folge von im jeweiligen Frequenzband des Audiosignals oder - bei breitbandiger Prädiktion - von im Audiosignal dem betreffende Prädiktionszeitpunkt unmittelbar vorangehenden Audio-Samples verwendet. Die Audio-Samples können dann durch ein insbesondere lineares, diskretes Prädiktionsfilter zur Prädiktion des nachfolgenden Signalanteils verwendet werden. Insbesondere kann bei der Auswahl der Audio-Samples, welche für eine Prädiktion zu verwenden sind, auch eine Überabtastung einer Filterbank, welche das Audiosignal in einzelne Frequenzbänder aufteilt, mit herangezogen werden, sodass in einem Frequenzband die Audio-Samples derart als für die Prädiktion relevante Signalanteile ausgewählt werden, dass möglichst keine nicht dem ursprünglichen Audiosignal inhärenten Korrelationen durch eine Überabtastung mit in die Signalanteile eingehen.

Zweckmäßigerweise wird als ein dem Prädiktionszeitpunkt nachfolgender Signalanteil jeweils eine Anzahl an Audio-Samples prädiziert, welchen jeweils eine Zeitreferenz nach dem betreffenden Prädiktionszeitpunkt zugeordnet wird. Insbesondere kann hierbei die Prädiktion frequenzbandweise erfolgen, sodass für diejenigen Frequenzbänder, in welchen eine Prädiktion erfolgt, jeweils unterschiedliche Audio-Samples mit derselben Zeitreferenz nach dem Prädiktionszeitpunkt erzeugt werden. Bevorzugt wird hierbei für jedes betreffende Frequenzband oder - bei breitbandiger Prädiktion - zu einem Prädiktionszeitpunkt immer nur ein Audio-Sample prädiziert, sodass jedes prädizierte Audio-Sample immer anhand der aktuell neuesten Audio-Samples des Audiosignals prädiziert werden kann.

Günstigerweise wird jeweils der einem Prädiktionszeitpunkt nachfolgende Signalanteil anhand von Signalanteilen des Audiosignals vor dem Prädiktionszeitpunkt mittels eines linearen Prädiktionsfilters prädiziert. Auch wenn die Prädiktion der betreffenden Signalanteile grundsätzlich auch auf andere Weise erfolgen kann, hat ein lineares Prädiktionsfilter neben einer geringen numerischen Komplexität und einer geringen Komplexität der Implementierung den weiteren Vorteil, dass sich ein lineares Prädiktionsfilter besonders dynamisch an die Gegebenheiten des vorliegenden Audiosignals anpassen lässt. So kann beispielsweise die Filterlänge - also die Anzahl an zu verwendender Audio-Samples sowie an entsprechenden Filterkoeffizienten - variiert und insbesondere erhöht werden, wenn mehrere Nutzsignalkomponenten im Audiosignal vorliegen. Hierdurch kann die Qualität der Prädiktion, also das "Herausfiltern" der einzelnen Nutzsignalkomponenten verbessert werden.

Zudem lassen sich die Filterkoeffizienten einzeln in Abhängigkeit des Audiosignals und de prädizierten Audiosignals variieren, sodass das Prädiktionsfilter immer die optimalen Filterkoeffizienten verwendet. Bevorzugt werden dabei die Filterkoeffizienten des linearen Prädiktionsfilters adaptiv in Abhängigkeit einer Abweichung des prädizierten Audiosignals vom Audiosignal bestimmt. Für eine geringe Abweichung liegen also eine gute Prädiktion und mithin die "richtigen" Filterkoeffizienten vor. Bei steigender Abweichung können die Filterkoeffizienten entsprechend hinsichtlich einer Minimierung dieser Abweichung variiert und angepasst werden.

Erfindungsgemäß wird das Audiosignal in eine Mehrzahl an Frequenzbändern zerlegt, wobei die Prädiktion eines dem jeweiligen Prädiktionszeitpunkt nachfolgenden Signalanteils anhand der Signalanteile des Audiosignals vor dem Prädiktionszeitpunkt jeweils frequenzbandweise erfolgt. Bevorzugt werden hierbei die Signalanteile vor dem Prädiktionszeitpunkt, welche für die Prädiktion verwendet werden, jeweils frequenzbandweise in denjenigen Frequenzbändern herangezogen, in welchen eine Prädiktion überhaupt erfolgen soll. Die Prädiktion des dem Prädiktionszeitpunkt nachfolgenden Signalanteils erfolgt dann für das jeweilige Frequenzband anhand dieser frequenzbandweisen Signalanteile des Audiosignals. Hierbei kann es grundsätzlich von Vorteil sein, die Prädiktion nur auf bestimmte Frequenzbänder zu beschränken.

Ist beispielsweise das Nutzsignal durch ein Sprachsignal gegeben, so liefert die Rauschunterdrückung im prädizierten Audiosignal gerade in niedrigen Frequenzbändern infolge der hohen Korrelationen der harmonischen Komponenten des Sprachsignals besonders gute Resultate. Für höhere Frequenzbänder weisen auch die Komponenten des Sprachsignals keine so hohen Korrelationen mehr auf wie die harmonischen Komponenten der niedrigen Frequenzbänder, sodass hier durch die Prädiktion auch Nutzsignalanteile unterdrückt werden können. Eine Auslöschung wichtiger Nutzsignalkomponenten im rauschunterdrückten Audiosignal kann nun dadurch verhindert werden, dass in höheren Frequenzbändern die Rauschunterdrückung auf andere Art erfolgt. In diesem Fall kann die Prädiktion in den höheren Frequenzbändern unterbleiben.

Erfindungsgemäß wird dabei zur Erzeugung des rauschunterdrückten Audiosignals das prädizierte Audiosignal mit Signalanteilen des Audiosignals frequenzbandweise gemischt, wobei das Mischungsverhältnis in Abhängigkeit von Beiträgen von harmonischen Komponenten und/oder von Beiträgen von unkorrelierten Komponenten im jeweiligen Frequenzband bestimmt wird. Insbesondere kann dies im Übergangsbereich zwischen niedrigen Frequenzen, wo ein hoher Anteil an harmonischen Komponenten vorliegt, und hohen Frequenzen, wo praktisch keine harmonischen Komponenten mehr vorliegen, erfolgen. Je höher der Anteil an Beiträgen von harmonischen Komponenten in einem Frequenzband, umso besser hinsichtlich des SNR ist generell die Rauschunterdrückung mittels Prädiktion. Im Übergangsbereich können harmonische Komponenten neben anderen Komponenten, welche z.B. stimmlose Sprache wie harte Konsonanten repräsentieren, koexistieren. Würde man das rauschunterdrückte Audiosignal nur anhand des prädizierten Audiosignals bilden, so würden die besagten, nicht harmonischen Komponenten des Nutzsignals ggf. bei der Prädiktion ebenfalls mit unterdrückt. Die beschriebene Mischung in Abhängigkeit der harmonischen Komponenten erlaubt hier eine Kompensierung.

Die Signalanteile des Audiosignals, welche mit dem prädizierten Audiosignal zu mischen sind, können hierbei zuvor insbesondere einer klassischen Rauschunterdrückung über frequenzbandweise, rauschabhängige Verstärkungsfaktoren unterzogen werden. Liegt ein hoher Anteil an unkorrelierten Komponenten vor, kann insbesondere angenommen werden, dass diese durch Rauschen bedingt sind, und nicht vom Nutzsignal stammen. Falls dabei gleichzeitig keine oder geringe Beiträge von harmonischen Komponenten vorliegen, kann vorgezogen werden, das betreffende Frequenzband vorwiegend durch die besagte klassische Rauschunterdrückung zu behandeln.

Vorteilhafterweise wird zur dabei Erzeugung des rauschunterdrückten Audiosignals das prädizierte Audiosignal mit Signalanteilen des Audiosignals frequenzbandweise gemischt, wobei auf die Signalanteile des Audiosignals vor der Mischung frequenzbandweise jeweils ein Rauschunterdrückungskoeffizient angewandt wird, und wobei der Rauschunterdrückungskoeffizient im jeweiligen Frequenzband anhand einer im prädizierten Audiosignal gegenüber dem Audiosignal erfolgten Rauschunterdrückung bestimmt wird. Dies bedeutet, dass für die Erzeugung der frequenzbandweisen, rauschabhängigen Verstärkungsfaktoren zur klassischen Rauschunterdrückung überprüft wird, wie hoch im prädizierten Audiosignal des betreffenden Frequenzbandes die Rauschunterdrückung ist, welche infolge der Prädiktion erfolgt. Um diesen Beitrag kann der Verstärkungsfaktor der klassischen Rauschunterdrückung nun verringert werden, da diese Rauschunterdrückung bereits durch die Prädiktion geleistet wird. Die durch die Prädiktion erfolgte Rauschunterdrückung kann dabei beispielsweise durch einen einfachen Vergleich der Signalpegel des prädizierten Audiosignals und des Audiosignals im Frequenzband abgeschätzt werden, da davon ausgegangen wird, dass eine Reduktion des Signalpegels gerade durch die Rauschunterdrückung erfolgt.

Zweckmäßigerweise wird für eine Anzahl an Frequenzbändern die Anwesenheit einer Anzahl an harmonischen Komponenten geschätzt, wobei die Filterlänge des linearen Prädiktionsfilters in Abhängigkeit der Anzahl an harmonischen Komponenten im Frequenzband gewählt wird. Insbesondere bei Sprache als Nutzsignal kann aufgrund der üblichen Abstände von harmonischen Komponenten, welche immer ganzzahlige Vielfache einer fundamentalen Frequenz darstellen, die sich im Frequenzbereich der hörbaren Stimme bewegt, und aufgrund der üblichen Breite von Frequenzbändern der Fall eintreten, dass auch zwei oder mehr harmonische Komponenten in ein Frequenzband fallen. Diese harmonischen Komponenten überlagern im Signalanteil des Frequenzbandes. Bevorzugt wird für diesen Fall ein längeres Filter verwendet. Dies trägt dem Umstand Rechnung, dass bei der Überlagerung dieser harmonischen Komponenten ein möglicherweise komplexeres Periodizitätsverhalten resultiert, weswegen ein längeres Filter und somit die Verwendung von mehr Signalanteilen wie z.B. mehr Audio-Samples für die Prädiktion vorteilhaft ist. Liegt jedoch nur eine einzige harmonische Komponente vor, so können bereits weniger Signalanteile für die Prädiktion ausreichen, und zur Verringerung der Komplexität der Berechnungen kann die Länge des Prädiktionsfilters entsprechend reduziert werden.

Die Erfindung nennt weiter ein Verfahren zur Rauschunterdrückung für ein Hörgerät, wobei durch einen Eingangswandler des Hörgerätes aus einem Schallsignal der Umgebung ein Eingangsschallsignal erzeugt wird, wobei ein Rauschen im Eingangssignal und/oder in einem vom Eingangssignal abgeleiteten Zwischensignal durch das vorbeschriebene Verfahren zur Rauschunterdrückung in einem Audiosignal unterdrückt wird, und wobei anhand des hieraus resultierenden rauschunterdrückten Signals ein Wiedergabesignal des Hörgerätes gebildet wird. Überdies nennt die Erfindung ein Hörgerät mit einem Eingangswandler zur Erzeugung eines Eingangssignals sowie einer Signalverarbeitungseinheit, welche zur Durchführung des vorbeschriebenen Verfahrens zur Rauschunterdrückung in einem Audiosignal eingerichtet ist. Die für das besagte Verfahren und für seine Weiterbildungen angegebenen Vorteile können dabei sinngemäß auf das Verfahren zur Rauschunterdrückung für ein Hörgerät und auf das Hörgerät übertragen werden. Insbesondere ist das Hörgerät dazu vorgesehen und eingerichtet, eine Hörschwäche eines Benutzers des Hörgerätes über eine entsprechende Verarbeitung des Eingangssignals in der Signalverarbeitungseinheit zu korrigieren. Bevorzugt wird dazu das Eingangssignal in der Signalverarbeitungseinheit frequenzbandabhängig verstärkt, besonders bevorzugt in Abhängigkeit eines Audiogramms des Benutzers. Das Verfahren zur Rauschunterdrückung in einem Audiosignal ist in der Verwendung in einem derartigen Hörgerät besonders vorteilhaft.

Unter einem vom Eingangssignal abgeleiteten Zwischensignal ist dabei insbesondere ein solches Signal umfasst, welches durch eine Summe oder Differenz mit anderen Signalen - z.B. einem Kompensationssignal zur Unterdrückung einer akustischen Rückkopplung - mit dem Eingangssignal erzeugt wird, und auch ein solches Signal, welches durch eine frequenzabhängige Verstärkung gemäß audiologischer Vorgaben für den Benutzer und/oder durch eine Dynamik-Kompression aus dem Eingangssignal hervorgeht.

Nachfolgend wird ein Ausführungsbeispiel der Erfindung anhand einer Zeichnung näher erläutert. Hierbei zeigen jeweils schematisch:
- Fig. 1: gegen eine Zeitachse eine Prädiktion von Audio-Samples anhand von einer Mehrzahl von vorangegangen Audio-Samples eines Audiosignals,
- Fig. 2: ein Verfahren zur Rauschunterdrückung in einem Audiosignal mittels der Prädiktion nach Fig. 1,
- Fig. 3: das Spektrum eines verrauschten Audiosignals mit Sprache als Nutzsignal sowie dasselbe Audiosignal nach einer Rauschunterdrückung durch das Verfahren gemäß Fig. 2, und
- Fig. 4: in einem Blockschaltbild ein Hörgerät.

Einander entsprechende Teile und Größen sind in allen Figuren jeweils mit gleichen Bezugszeichen versehen.

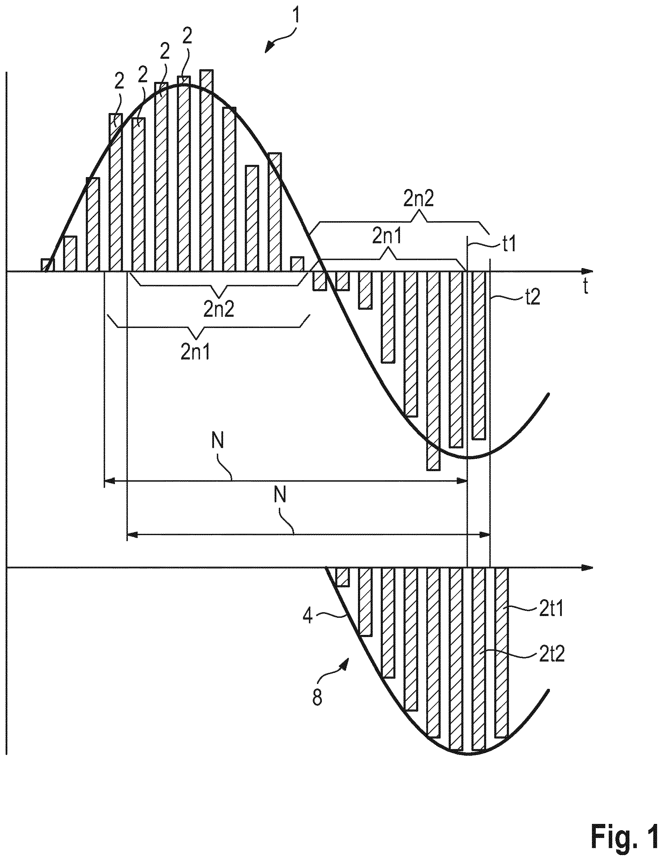

In Figur 1 ist schematisch ein Audiosignal 1 gegen eine Zeitachse t aufgetragen. Das Audiosignal 1 liegt hierbei in digitalisierter Form vor, also in Form der Audio-Samples 2. Die Amplituden der einzelnen Audio-Samples 2 beschreiben hierbei näherungsweise eine Sinuskurve 4, wobei die Abweichungen von der Sinuskurve 4 ein additives Rauschen zum Nutzsignal darstellen, welches durch den der Sinuskurve 4 entsprechenden Schall gegeben ist. Die Audio-Samples 2 des Audiosignals 1 liegen dabei nur bis zu einem Prätiktionszeitpunkt t1 vor. Die Signalanteile 2n1 des Audiosignals 1, welche durch letzten N Audio-Samples 2 vor dem Prädiktionszeitpunkt t1 gegeben sind, werden nun für eine Prädiktion für das dem Prädiktionszeitpunkt t1 unmittelbar nachfolgende Audio-Samples 2t1 verwendet. Dies erfolgt über ein lineares Prädiktionsfilter der Länge N. Die lineare Prädiktion bestimmt hierbei das nachfolgende Audio-Sample 2t1 aus den in den für die Prädiktion verwendeten Signalanteilen 2n1 vorliegenden Korrelationen. Unkorreliertes, statistisches Rauschen kann hierbei nicht vorhergesagt werden.

Die besagten Korrelationen sind vorliegend gegeben durch die Sinuskurve 4, sodass das nachfolgende Audio-Sample 2t1 gemäß der Sinuskurve 4 prädiziert wird, wobei das additive Rauschen, durch welches in den Audio-Samples 2 vor dem Prädiktionszeitpunkt t1 die Amplituden von der Sinuskurve 4 abweichen, infolge der fehlenden Korrelation bei der Prädiktion nur zu einem geringen Beitrag führt. Das Resultat ist für das prädizierte Audio-Sample 2t1 nahezu der Wert der Amplitude der Sinuskurve 4, wobei kleine Abweichungen von diesem Wert aus der endlichen Filterlänge N sowie aus residualen Korrelationen im additiven Rauschen herrühren.

Nun wird zum Ende des Audio-Samples 2t1 der nächste Prädiktionszeitpunkt t2 gewählt, und in eben beschriebener Weise anhand der Signalanteile 2n2, welche erneut durch die letzten N Audio-Samples 2 vor dem Prädiktionszeitpunkt t2 gegeben sind, das dem Prädiktionszeitpunkt t2 nachfolgende Audio-Sample 2t2 prädiziert.

Aus den prädizierten Audio-Samples 2t1, 2t2 wird nun das prädizierte Audiosignal 8 gebildet, dessen Verlauf wesentlich besser die Sinuskurve 4 wiedergibt, als das Audiosignal 1. Das additive Rauschen im Audiosignal 1 wurde somit durch die Prädiktion erheblich reduziert. Das prädizierte Audiosignal 8 kann nun direkt als ein rauschunterdrücktes Audiosignal verwendet werden, wenn davon auszugehen ist, dass im Audiosignal 1 die Nutzsignalkomponenten hinreichend korreliert sind, und somit bei der Rauschunterdrückung mittels der Prädiktion keine eigentlich gewünschten Signalkomponenten unterdrückt werden. Ist jedoch davon auszugehen, dass der Nutzsignalanteil im Audiosignal 1 auch unkorrelierte Komponenten aufweist, so kann zur Kompensation dem prädizierten Audiosignal 8 für die Erzeugung eines rauschunterdrückten Audiosignals ein Anteil des Audiosignals 1 beigemischt werden. Hierdurch werden zeitlich korrelierte, also insbesondere tonale Nutzsignalkomponenten des Audiosignals 1 hervorgehoben, ohne dass die unkorrelierten Nutzsignalkomponenten völlig ausgelöscht werden. Durch diese Anhebung findet zudem dennoch eine Unterdrückung des unkorrelierten Rauschens statt.

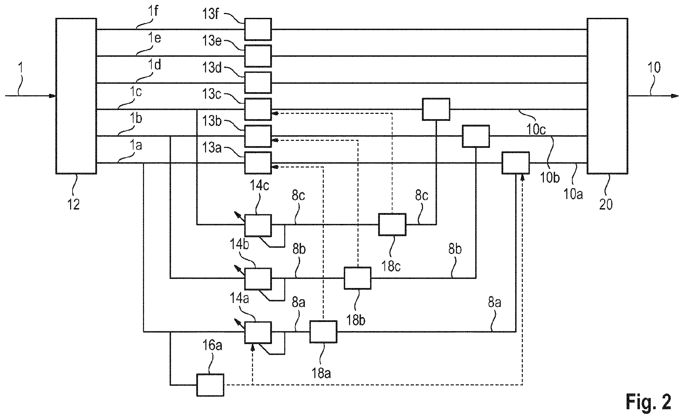

In Fig. 2 ist schematisch in einem Blockschaltbild ein Verfahren zur Rauschunter-drückung eines Audiosignals 1 mittels der Prädiktion nach Fig. 1 dargestellt. Das Audiosignal 1 wird zunächst durch eine Filterbank 12 in einzelne Frequenzbänder 1a-f zerlegt. Für die Frequenzbänder 1a-f des Audiosignals 1 werden nun einerseits Rauschunterdrückungskoeffizienten 13a-f ermittelt, welche für eine klassische, frequenzbandweise Rauschunterdrückung jeweils auf den Signalanteil im einzelnen Frequenzband 1a-f zu multiplizieren sind. Anhand der Signalanteile in den ersten drei Frequenzbändern 1a-c wird mittels des anhand von Figur 1 dargestellten Verfahrens zur Rauschunterdrückung durch Prädiktion jeweils ein prädiziertes Audiosignal 8a-c erzeugt.

Die Erzeugung der prädizierten Audiosignale 8a-c kann sich dabei auf die unteren Frequenzbänder 1a-c beschränken, da mit zunehmender Frequenz der harmonische Anteil eines Sprachsignals als Nutzsignal abnimmt, und zunehmend Signalkomponenten dominieren, welche stimmlose Sprache wie zum Beispiel entsprechende Konsonanten repräsentieren. Derartige Signalkomponenten sind jedoch nicht mehr in der harmonischen Struktur über das Frequenzspektrum verteilt, sodass die für das anhand von Figur 1 dargestellte Verfahren erforderlichen Korrelationen nicht mehr im selben Maß vorhanden sind, wie bei den harmonischen Komponenten in niedrigen Frequenzbereichen. Vor diesem Hintergrund wird zur Vermeidung von Artefakten die Anwendung des Verfahrens zur Rauschunterdrückung mittels Reduktion, wie sie in Figur 1 dargestellt ist, auf diejenigen Frequenzbänder limitiert, in welchen das besagte Verfahren mit hinreichend hoher Sicherheit erhebliche Vorteile liefert.

Dies ist in Figur 2 anhand der Frequenzbänder 1a-c dargestellt, wobei eine entsprechende Anwendung des Verfahrens im allgemeinen nicht auf die ersten 3 Frequenzbänder limitiert bleiben soll, sondern mithin von der Struktur der Filterbank 12 und der daraus resultierenden realen Anzahl an Frequenzbändern abhängt, und zudem auch dynamisch anhand der Signalanteile in den einzelnen Frequenzbändern und insbesondere anhand ihres Anteils an harmonischen Signalkomponenten bestimmt werden kann.

Die Filterkoeffizienten der Prädiktionsfilter 14a-c, anhand derer die prädizierten Audiosignale 8a-c erzeugt werden, werden hierbei adaptiv in Abhängigkeit der jeweiligen Abweichung des prädizierten Audiosignals 8a-c vom entsprechenden ursprünglichen Audiosignal im Frequenzband 1a-c bestimmt. Überdies wird für die einzelnen Frequenzbänder 1a-c, für welche jeweils ein prädiziertes Audiosignal 8a-c erzeugt wird, der Anteil an Beiträgen 16a von harmonischen Komponenten im jeweiligen Frequenzband bestimmt. Dies ist vorliegend symbolisch für das erste Frequenzband 1a dargestellt, kann jedoch insbesondere für alle Frequenzbändern 1a-c erfolgen, in welchen ein prädiziertes Audiosignal 8a-c erzeugt wird. Anhand der Beiträge 16a von harmonischen Komponenten kann die Länge des Prädiktionsfilters 14a verändert werden. Hierbei wird bevorzugt für ein Frequenzband mit einer größeren Anzahl an harmonischen Komponenten ein längeres Filter verwendet. Dies trägt dem Umstand Rechnung, dass eine Mehrzahl an harmonischen Komponenten in einem Frequenzband, in einer Überlagerung dieser harmonischen Komponenten mit einem möglicherweise komplexeren Periodizitätsverhalten resultiert, weswegen ein längeres Filter und somit die Verwendung von mehr Audio-Samples für die Prädiktion vorteilhaft ist. Liegt jedoch nur eine einzige harmonische Komponente vor, so können bereits weniger Audio-Samples für die Prädiktion ausreichen, und zur Verringerung der Komplexität der Berechnungen kann die Länge des Prädiktionsfilters 14a entsprechend reduziert werden.

Weiter wird für die prädizierten Audiosignale 8a-c jeweils ein Maß 18a für die im jeweiligen prädizierten Audiosignal 8a-c gegenüber dem entsprechenden Audiosignal im Frequenzband 1a-c erfolgte Rauschunterdrückung bestimmt. Dies ist vorliegend symbolisch für das erste Frequenzband 1a dargestellt. Das Maß 18a kann dabei beispielsweise durch einen einfachen Vergleich der Signalpegel des prädizierten Audiosignals 8a und des Audiosignals im Frequenzband 1a erfolgen, da davon ausgegangen wird, dass eine Reduktion des Signalpegels gerade durch die Rauschunterdrückung erfolgt. Das Maß 18a kann nun für eine Korrektur des Rauschunterdrückungskoeffizienten 13a verwendet werden, da davon ausgegangen werden kann, dass ein Rauschen im Audiosignal im Frequenzband 1 durch das prädizierte Audiosignal 8a bereits um das Maß 18a unterdrückt wird, und eine entsprechende zusätzliche Absenkung der Verstärkung über den Rauschunterdrückungskoeffizienten 13a im Rahmen der klassischen, frequenzbandweisen Rauschunterdrückung daher nicht erforderlich ist. Die beschriebene Korrektur des Rauschunterdrückungskoeffizienten 13a kann hierbei für diejenigen Frequenzbänder 1a-c erfolgen, für welche ein prädiziertes Audiosignal 8a-c erzeugt wird, und entsprechend ein Maß für die bei der Prädiktion erfolgende Rauschunterdrückung ermittelt werden kann.

Nach der Anwendung der Rauschunterdrückungskoeffizienten 13a-c kann das Audiosignal in den betreffenden Frequenzbändern 1a-c mit dem jeweiligen prädizierten Audiosignal 8a-c gemischt werden, und hierdurch im jeweiligen Frequenzband das rauschunterdrückte Audiosignal 10a-c erzeugt werden. Das Mischungsverhältnis, wie viel Anteil an prädiziertem Audiosignal 8a-c hierbei in das rauschunterdrückte Audiosignal 10a-c eingeht, kann dabei insbesondere in Abhängigkeit der Beiträge 16a von harmonischen Komponenten im jeweiligen Frequenzband bestimmt werden, was vorliegend symbolisch für das erste Frequenzband 1a dargestellt ist, jedoch bevorzugt für alle Frequenzbänder 1a-c, in welchen ein prädiziertes Audiosignal 8a-c erzeugt wird, erfolgen kann. Abschließend können die rauschunterdrückten Audiosignale 10a-c sowie die anhand der Rauschunterdrückungskoeffizienten 13d-f rauschunterdrückten Audiosignale der Frequenzbänder 1d-f über eine Synthesefilterbank 20 in ein einziges rauschunterdrücktes Audiosignal 10 in der Zeit-Domäne transformiert werden.

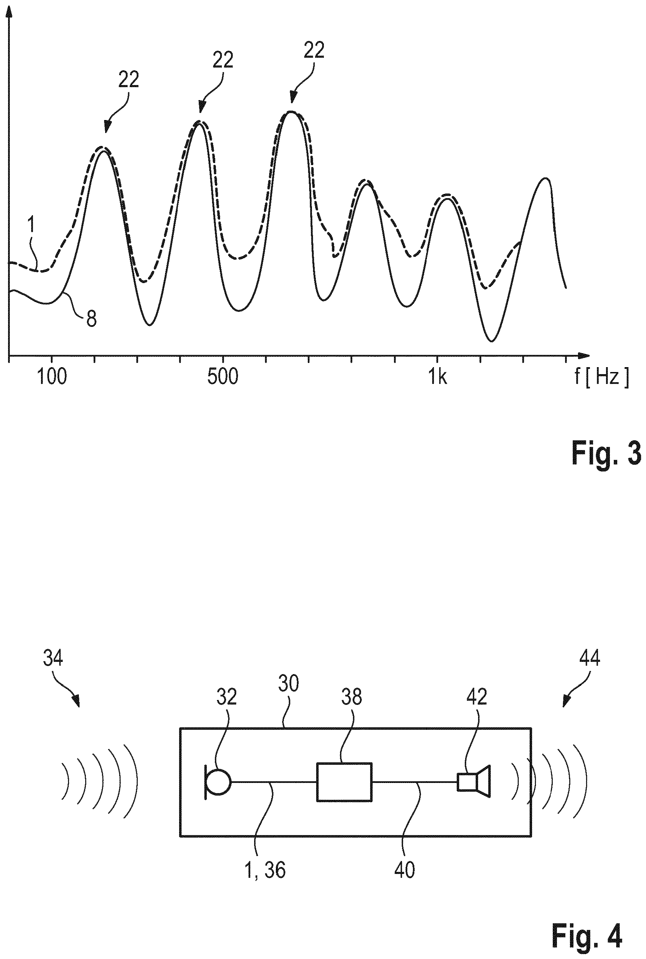

In Figur 3 ist gegen eine Frequenzachse f das Spektrum eines verrauschten Audiosignals 1 (gestrichelte Linie) dargestellt, in welchem die Nutzsignalanteile durch ein Sprachsignal gegeben sind. Dieses Sprachsignal ist im Audiosignal 1 durch ein unkorreliertes, breitbandiges Rauschen überlagert. Nach einer Anwendung des anhand von Figur 1 dargestellten Verfahrens zur Rauschunterdrückung resultiert dabei das prädizierte Audiosignal 8 (durchgezogene Linie). Man erkennt deutlich die harmonischen Komponenten 22, die sowohl im Audiosignal 1 als auch im prädizierten Audiosignal 8 im Wesentlichen dieselben Beiträge liefern. Für die Frequenzbereiche zwischen den harmonischen Komponenten 22 zeigt sich jedoch beim prädizierten Audiosignal 8 eine klare Unterdrückung des Rauschens.

In Figur 4 ist schematisch in einem Blockschaltbild ein Hörgerät 30 dargestellt. Ein Eingangswandler 32 des Hörgerätes 30, welcher vorliegend als Mikrofon ausgebildet ist, erzeugt aus einem Schallsignal, 34 der Umgebung ein Eingangssignal 36. Das Eingangssignal 36 wird einer Signalverarbeitungseinheit 38 zugeführt, und dort gemäß den audiologischen Vorgaben des Benutzers des Hörgerätes 30 verarbeitet, und dabei insbesondere frequenzbandabhängig verstärkt. Die Signalverarbeitungseinheit 38 erzeugt ein Wiedergabesignal 40, welches durch einen Ausgangswandler 42 des Hörgerätes 30 in ein Ausgangsschallsignal 44 umgewandelt wird. Der Ausgangswandler 42 ist dabei vorliegend als ein Lautsprecher ausgebildet. Das anhand von Figur 2 beschriebene Verfahren zur Rauschunterdrückung eines Audiosignals kann nun in der Signalverarbeitungseinheit 38 insbesondere auf das Eingangssignal 36 als Audiosignal 1 angewandt werden, oder auch auf vom Eingangssignal 36 abgeleitete Zwischensignale, wie sie durch eine Vorverarbeitung des Eingangssignals 36 oder auch durch eine nicht näher dargestellte Unterdrückung einer akustischen Rückkopplung erzeugt werden können. Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen, der durch die Patentansprüche definiert ist.

### Bezugszeichenliste

- 1: Audiosignal
- 1a-f: Frequenzbänder
- 2: Audio-Sample
- 2n1,2n2: Signalanteil
- 2t1, 2t2: prädiziertes Audio-Sample
- 4: Sinuskurve
- 8, 8a-c: prädiziertes Audiosignal
- 10, 10a-f: rauschunterdrücktes Audiosignal
- 12: Filterbank
- 13a-f: Rauschunterdrückungskoeffizient
- 14a-c: lineares Prädiktionsfilter
- 16a: Beitrag
- 18a: Maß
- 20: Synthesefilterbank
- 22: harmonische Komponente
- 30: Hörgerät
- 32: Eingangswandler
- 34: Schallsignal
- 36: Eingangssignal
- 38: Signalverarbeitungseinheit
- 40: Wiedergabesignal
- 42: Ausgangswandler
- 44: Ausgangsschallsignal

- f: Frequenz
- N: Anzahl an Samples
- t: Zeit
- t1, t2: Prädiktionszeitpunkt

## Patentansprüche

1. Verfahren zur Rauschunterdrückung in einem Audiosignal (1),
wobei das Audiosignal (1) in eine Mehrzahl an Frequenzbändern (1a-f) zerlegt wird,
wobei für eine Mehrzahl an Prädiktionszeitpunkten (t1, t2) jeweils anhand von Signalanteilen (2n1, 2n2) des Audiosignals (1) vor dem Prädiktionszeitpunkt (t1, t2) ein dem Prädiktionszeitpunkt (t1, t2) nachfolgender Signalanteil (2t1, 2t2) prädiziert wird,
wobei die Prädiktion eines dem jeweiligen Prädiktionszeitpunkt (t1, t2) nachfolgenden Signalanteils (2t1, 2t2) anhand der Signalanteile (2n1, 2n2) des Audiosignals (1) vor dem Prädiktionszeitpunkt (t1, t2) jeweils frequenzbandweise erfolgt,
wobei aus den jeweils einem Prädiktionszeitpunkt (t1, t2) nachfolgenden Signalanteilen (2t1, 2t2) ein prädiziertes Audiosignal (8, 8a-c) gebildet wird,
wobei anhand des prädizierten Audiosignals (8. 8a-c) ein rauschunterdrücktes Audiosignal (10, 10a-f) erzeugt wird,
wobei zur Erzeugung des rauschunterdrückten Audiosignals (10, 10a-f) das prädizierte Audiosignal (8a-c) mit Signalanteilen des Audiosignals (1) frequenzbandweise gemischt wird, und
wobei das Mischungsverhältnis in Abhängigkeit von Beiträgen (16a) von harmonischen Komponenten (22) und/oder von Beiträgen von unkorrelierten Komponenten im jeweiligen Frequenzband (1a-c) bestimmt wird.

2. Verfahren nach Anspruch 1,
wobei für Signalanteile (2n1, 2n2) des Audiosignals (1) vor einem Prädiktionszeitpunkt (t1, t2) jeweils eine Mehrzahl an dem Prädiktionszeitpunkt (t1, t2) vorausgehenden Audio-Samples (2) herangezogen wird.

3. Verfahren nach Anspruch 1 oder Anspruch 2,
wobei als ein dem Prädiktionszeitpunkt (t1, t2) nachfolgender Signalanteil (2t1, 2t2) jeweils eine Anzahl an Audio-Samples prädiziert wird, welchen jeweils eine Zeitreferenz nach dem betreffenden Prädiktionszeitpunkt (t1, t2) zugeordnet wird.

4. Verfahren nach einem der vorhergehenden Ansprüche,
wobei jeweils der einem Prädiktionszeitpunkt (t1, t2) nachfolgende Signalanteil (2t1, 2t2) anhand von Signalanteilen (2n1, 2n2) des Audiosignals (1) vor dem Prädiktionszeitpunkt (t1, t2) mittels eines linearen Prädiktionsfilters (14a-c) prädiziert wird.

5. Verfahren nach Anspruch 4,
wobei die Filterkoeffizienten des linearen Prädiktionsfilters (14a-c) adaptiv in Abhängigkeit einer Abweichung des prädizierten Audiosignals (8a-c) vom Audiosignal (1) bestimmt werden.

6. Verfahren nach einem der vorhergehenden Ansprüche,
wobei zur Erzeugung des rauschunterdrückten Audiosignals (10, 10a-c) das prädizierte Audiosignal (8a-c) mit Signalanteilen des Audiosignals (1) frequenzbandweise gemischt wird,
wobei auf die Signalanteile des Audiosignals (1) vor der Mischung frequenzbandweise jeweils ein Rauschunterdrückungskoeffizient (13a-c) angewandt wird, und wobei der Rauschunterdrückungskoeffizient (13a-c) im jeweiligen Frequenzband anhand einer im prädizierten Audiosignal (8a-c) gegenüber dem Audiosignal (1) erfolgten Rauschunterdrückung bestimmt wird.

7. Verfahren nach einem der Ansprüche 4 oder 5 oder nach Anspruch 6 in Verbindung mit einem der Ansprüche 4 oder 5,
wobei für eine Anzahl an Frequenzbändern (1a-c) eine Anzahl an harmonischen Komponenten (22) geschätzt wird, und wobei
die Filterlänge des linearen Prädiktionsfilters (14a-c) in Abhängigkeit der Anzahl an harmonischen Komponenten (22) im Frequenzband (1a-c) gewählt wird.

8. Verfahren zur Rauschunterdrückung für ein Hörgerät (30),
wobei durch einen Eingangswandler (32) des Hörgerätes (30) aus einem Schallsignal (34) der Umgebung ein Eingangssignal (36) erzeugt wird,
wobei ein Rauschen im Eingangssignal (36) und/oder in einem vom Eingangssignal (36) abgeleiteten Zwischensignal durch das Verfahren zur Rauschunterdrückung in einem Audiosignal nach einem der vorhergehenden Ansprüche unterdrückt wird, und
wobei anhand des hieraus resultierenden rauschunterdrückten Signals ein Wiedergabesignal (40) des Hörgerätes (30) gebildet wird.

9. Hörgerät (30) mit einem Eingangswandler (32) zur Erzeugung eines Eingangssignals (36) sowie einer Signalverarbeitungseinheit (38), welche zur Durchführung des Verfahrens nach einem der Ansprüche 1 bis 7 eingerichtet ist.

## Claims

1. Method for noise reduction in an audio signal (1),
wherein the audio signal (1) is split into a plurality of frequency bands (1a-f), wherein for a plurality of prediction instants of time (t1, t2), a respective signal component (2t1, 2t2) subsequent to the prediction instant (t1, t2) is predicted on the basis of signal components (2n1, 2n2) of the audio signal (1) prior to the prediction instant of time (t1, t2),
wherein the prediction of a signal component (2t1, 2t2) subsequent to the respective prediction instant (t1, t2) on the basis of signal components (2n1, 2n2) of the audio signal (1) prior to the prediction instant of time (t1, t2) is carried out in a frequency band-wise manner,
wherein a predicted audio signal (8, 8a-c) is derived from the signal components (2t1, 2t2) subsequent to a respective prediction instant of time (t1, t2),
wherein a noise-suppressed audio signal (10, 10a-f) is generated on the basis of the predicted audio signal (8, 8a-c),
wherein, for generating the noise-suppressed audio signal (10, 10a-f), the predicted audio signal (8a-c) is mixed, frequency band-wise, with signal components of the audio signal (1), and
wherein the mixing ration is determined in dependence on contributions (16a) from harmonic components (22) and/or of contributions from uncorrelated components in the respective frequency band (1a-c).

2. The method according to claim 1,
wherein for signal components (2n1, 2n2) of the audio signal (1) prior to a prediction instant of time (t1, t2), a plurality of audio samples (2) preceding the prediction instant of time (t1, t2) are taken into account.

3. The method according to claim 1 or claim 2,
wherein as a signal component (2t1, 2t2) subsequent to the prediction instant of time (t1, t2), in each case a number of respective audio samples is predicted, to each of which a time reference posterior to the relevant prediction instant of time (t1, t2) is assigned.

4. The method according to one of the preceding claims,
wherein in each case the signal component (2t1, 2t2) subsequent to a prediction instant of time (t1, t2) is predicted by means of a linear prediction filter (14a-c) on the basis of signal components (2n1, 2n2) of the audio signal (1) prior to the prediction instant of time (t1, t2).

5. The method according to claim 4,
wherein the filter coefficients of the linear prediction filter (14a-c) are determined adaptively in dependence on a deviation of the predicted audio signal (8a-c) from the audio signal (1).

6. The method according to one of the preceding claims,
wherein, for generating the noise-suppressed audio signal (10, 10a-c), the predicted audio signal (8a-c) is mixed with signal components of the audio signal (1) frequency band-wise,
wherein, prior to said mixing, a respective noise reduction coefficient (13a-c) is applied to each of the signal components of the audio signal (1) in a frequency band-wise manner, and
wherein the noise suppression coefficient (13a-c) in the respective frequency band is determined on the basis of a noise suppression achieved in the predicted audio signal (8a-c), compared to the audio signal (1).

7. The method of one of claims 4 or 5, or of claim 6 in combination with one of claims 4 or 5,
wherein for a number of frequency bands (1a-c), a number of harmonic components (22) is estimated, and
wherein the filter length of the linear prediction filter (14a-c) is selected in dependence on the number of harmonic components (22) in the frequency band (1a-c).

8. Method for noise reduction in a hearing device (30),
wherein an input signal (36) is generated from an environment sound signal (34) by an input transducer (32) of the hearing device (30),
wherein noise in the input signal (36) and/or in an intermediate signal derived from the input signal (36) is suppressed by the method for noise suppression in an audio signal according to one of the preceding claims, and
wherein, on the basis of the noise-suppressed signal resulting therefrom, a reproduction signal (40) of the hearing device (30) is formed.

9. A hearing device (30), comprising an input transducer (32) for generating an input signal (36) and a signal processing unit (38) configured to perform the method according to one of claims 1 to 7.

## Revendications

1. Procédé pour réduire le bruit dans un signal audio (1),
dans lequel le signal audio (1) est décomposé en une pluralité de bandes de fréquences (1a-f),
dans lequel, pour une pluralité d'instants de prédiction (t1, t2), une composante de signal (2t1, 2t2) postérieure à l'instant de prédiction (t1, t2) est respectivement prédite en fonction des composantes de signal (2n1, 2n2) du signal audio (1) antérieures à l'instant de prédiction (t1, t2),
dans lequel la prédiction d'une composante de signal (2t1, 2t2) postérieure à l'instant de prédiction respectif (t1, t2) est effectuée en fonction des composantes de signal (2n1, 2n2) du signal audio (1) avant l'instant de prédiction (t1, t2) respectivement sur une base de bande de fréquence, dans lequel un signal audio prédit (8, 8a-c) est formé à partir des composantes de signal (2t1, 2t2) respectivement postérieures à un instant de prédiction (t1, t2),
dans lequel un signal audio à bruit supprimé (10, 10a-f) est généré en fonction du signal audio prédit (8, 8a-c),
dans lequel le signal audio prédit (8a-c) est mélangé avec des composantes de signal du signal audio (1) sur une base de bande de fréquence afin de générer le signal audio à bruit supprimé (10, 10a-f), et
dans lequel le rapport de mélange est déterminé en dépendance des contributions (16a) des composantes harmoniques (22) et/ou des contributions des composantes non corrélées dans la bande de fréquence (1a-c) respective.

2. Procédé selon la revendication 1,
dans lequel respectivement une pluralité d'échantillons audio (2) antérieures à l'instant de prédiction (t1, t2) est utilisée pour des composantes de signal (2n1, 2n2) du signal audio (1) avant l'instant de prédiction (t1, t2).

3. Procédé selon la revendication 1 ou la revendication 2,
dans lequel, en tant que composante de signal (2t1, 2t2) postérieure à l'instant de prédiction (t1, t2), respectivement un certain nombre d'échantillons audio est prédit, auquel une référence de temps après l'instant de prédiction (t1, t2) en question est respectivement attribuée.

4. Procédé selon l'une des revendications précédentes,
dans lequel la composante de signal (2t1, 2t2) postérieure à un instant de prédiction (t1, t2) est respectivement prédite en fonction des composantes de signal (2n1, 2n2) du signal audio (1) avant l'instant de prédiction (t1, t2) au moyen d'un filtre de prédiction linéaire (14a-c).

5. Procédé selon la revendication 4,
dans lequel les coefficients de filtre du filtre de prédiction linéaire (14a-c) sont déterminés de manière adaptative en dépendance d'un écart du signal audio prédit (8a-c) par rapport au signal audio (1).

6. Procédé selon l'une des revendications précédentes,
dans lequel, afin de générer le signal audio à bruit supprimé (10, 10a-c), le signal audio prédit (8a-c) est mélangé avec des composantes de signal du signal audio (1) sur une base de bande de fréquence,
dans lequel un coefficient de réduction de bruit (13a-c) est respectivement appliqué aux composantes de signal du signal audio (1) sur une base de bande de fréquence avant le mélange, et
dans lequel le coefficient de réduction de bruit (13a-c) dans la bande de fréquence respective est déterminé en fonction d'une réduction de bruit effectuée dans le signal audio prédit (8a-c) par rapport au signal audio (1).

7. Procédé selon l'une des revendications 4 ou 5, ou selon la revendication 6 en conjonction avec l'une des revendications 4 ou 5,
dans lequel, pour un certain nombre de bandes de fréquences (1a-c), un certain nombre de composantes harmoniques (22) est estimé, et dans lequel la longueur de filtre du filtre de prédiction linéaire (14a-c) est sélectionnée en dépendance du nombre de composantes harmoniques (22) dans la bande de fréquences (1a-c).

8. Procédé pour réduire le bruit pour une aide auditive (30),
dans lequel, par un transducteur d'entrée (32) de l'aide auditive (30), un signal d'entrée (36) est généré à partir d'un signal sonore (34) de l'environnement, dans lequel le bruit dans le signal d'entrée (36) et/ou dans un signal intermédiaire dérivé du signal d'entrée (36) est supprimé par le procédé de suppression du bruit dans un signal audio selon l'une des revendications précédentes, et
dans lequel, en fonction du signal à bruit supprimé, qui en résulte, un signal de reproduction (40) de l'aide auditive (30) est formé.

9. Aide auditive (30) avec un transducteur d'entrée (32) pour générer un signal d'entrée (36) et avec une unité de traitement de signal (38), qui est agencée pour exécuter le procédé selon l'une des revendications 1 à 7.
